# EUROPEAN PATENT APPLICATION

(11) **EP 4 380 293 A1**
(43) Date of publication of application: **05.06.2024**
(21) Application number: 21951381.9
(22) Date of filing: 30.07.2021
(51) Int. Cl.: H04W 76/11, H04W 4/70

(54) **ZERO POWER CONSUMPTION COMMUNICATION SYSTEM AND COMMUNICATION METHOD THEREOF**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); XU, Weijie, Dongguan, Guangdong 523860 (CN)
(74) Representative: Ipside
(86) International application number: PCT/CN2021/109801
(87) International publication number: WO 2023/004791

(57) **Abstract**

Provided in the embodiments of the present disclosure are a zero power consumption communication system and a communication method thereof, the zero power consumption communication system comprising: at least one of the following: a zero power consumption terminal, an access network node, a core network node, a data center node, and a service control node; the zero power consumption terminal can communicate with the access network node; the access network node can communicate with at least one of the zero power consumption terminal and the access network node; the core network node can communicate with at least one of the access network node, the data center node, and the service control node; the data center node can communicate with at least one of the core network node and the service control node, and the service control node can communicate with at least one of the core network node and the data center node.

## Description

### TECHNICAL FIELD

The embodiments of the present disclosure relate to the field of mobile communication technology, and more particularly to a zero power communication system and a communication method thereof.

### BACKGROUND

A zero power terminal needs to obtain power before driving itself to work. Generally, the zero power terminal obtains power by harvesting power from radio waves. Before the zero power terminal obtains power, the zero power terminal cannot receive signals transmitted by a network device, nor can it transmit signals to the network device.

The zero power terminal has the characteristics of limited power supply, small amount of data transmission and limited processing capacity. However, the current communication system is too complex to meet the communication requirements of the zero power terminal.

### SUMMARY

The embodiments of the present disclosure provide a zero power communication system and a communication method thereof, a terminal device, a chip, a computer-readable storage medium, a computer program product and a computer program.

The zero power communication system provided by the embodiments of the present disclosure includes at least one of: a zero power terminal, an access network node, a core network node, a data center node or a service control node.

The zero power terminal is capable of communicating with the access network node.

The access network node is capable of communicating with at least one of the zero power terminal or the access network node.

The core network node is capable of communicating with at least one of the access network node, the data center node or the service control node.

The data center node is capable of communicating with at least one of the core network node or the service control node.

The service control node is capable of communicating with at least one of the core network node or the data center node.

The communication method provided by the embodiments of the present disclosure is applied to the zero power communication system, and the method includes the following operation.

The zero power terminal communicates with at least one of the core network node, the data center node or the service control node through the access network node.

The terminal device provided by the embodiments of the present disclosure includes a processor and a memory for storing a computer program. The processor calls and runs the computer program stored in the memory to perform the above communication method.

The chip provided by the embodiments of the present disclosure is configured to implement the above communication method.

Specifically, the chip includes a processor for calling and running a computer program from a memory, to cause a device on which the chip is installed to perform the above communication method.

The computer-readable storage medium provided by the embodiments of the present disclosure stores a computer program, and the computer program causes a computer to perform the above communication method.

The computer program product provided by the embodiments of the present disclosure includes computer program instructions, and the computer program instructions cause a computer to perform the above communication method.

The computer program provided by the embodiments of the present disclosure, when run on a computer, causes the computer to perform the above communication method.

Through the above technical solution, a zero power communication system is proposed. The zero power communication system has low complexity, and enables the communication requirements of the zero power terminal to be met, thus enabling the communication of the zero power terminal.

### BRIEF DESCRIPTION OF THE DRAWINGS

The accompanying drawings illustrated herein are used to provide a further understanding of the present disclosure and form a part of the present disclosure, and the illustrative embodiments and the description thereof of the present disclosure are used to explain the present disclosure and do not constitute undue limitations on the present disclosure. In the accompanying drawings:
FIG. 1 is a schematic diagram of an application scenario of an embodiment of the present disclosure.
FIG. 2 is a schematic diagram of a zero power communication provided by an embodiment of the present disclosure.
FIG. 3 is a schematic diagram of power harvesting provided by an embodiment of the present disclosure.
FIG. 4 is a schematic diagram of a back scattering communication provided by an embodiment of the present disclosure.
FIG. 5 is a circuit schematic diagram of a resistive load modulation provided by an embodiment of the present disclosure.
FIG. 6 is a schematic diagram of a non-return zero inverted (NRZI) coding provided by an embodiment of the present disclosure.
FIG. 7 is a schematic diagram of a Manchester coding provided by an embodiment of the present disclosure.
FIG. 8 is a schematic diagram of a unipolar return zero coding provided by an embodiment of the present disclosure.
FIG. 9 is a schematic diagram of a differential binary phase coding provided by an embodiment of the present disclosure.
FIG. 10 is a schematic diagram of a miller coding provided by an embodiment of the present disclosure.
FIG. 11 is a structure diagram of a zero power communication system provided by an embodiment of the present disclosure.
FIG. 12 is a first schematic diagram of a zero power terminal identity provided by an embodiment of the present disclosure.
FIG. 13 is a second schematic diagram of a zero power terminal identity provided by an embodiment of the present disclosure.
FIG. 14 is a first schematic diagram of a zero power service identity provided by an embodiment of the present disclosure.
FIG. 15 is a second schematic diagram of a zero power service identity provided by an embodiment of the present disclosure.
FIG. 16 is a schematic diagram of states of a zero power terminal provided by an embodiment of the present disclosure.
FIG. 17 is a first schematic diagram of a control plane protocol stack provided by an embodiment of the present disclosure.
FIG. 18 is a second schematic diagram of a control plane protocol stack provided by an embodiment of the present disclosure.
FIG. 19 is a third schematic diagram of a control plane protocol stack provided by an embodiment of the present disclosure.
FIG. 20 is a fourth schematic diagram of a control plane protocol stack provided by an embodiment of the present disclosure.
FIG. 21 is a fifth schematic diagram of a control plane protocol stack provided by an embodiment of the present disclosure.
FIG. 22 is a sixth schematic diagram of a control plane protocol stack provided by an embodiment of the present disclosure.
FIG. 23 is a first schematic diagram of a user plane protocol stack provided by an embodiment of the present disclosure.
FIG. 24 is a second schematic diagram of a user plane protocol stack provided by an embodiment of the present disclosure.
FIG. 25 is a schematic diagram of a quality of service (QoS) model corresponding to a first transmission mode provided by an embodiment of the present disclosure.
FIG. 26 is a schematic diagram of a QoS model corresponding to a second transmission mode and corresponding bearers provided by an embodiment of the present disclosure.
FIG. 27 is a schematic structure diagram of a communication device provided by an embodiment of the present disclosure.
FIG. 28 is a schematic structure diagram of a chip provided by an embodiment of the present disclosure.
FIG. 29 is a schematic block diagram of a communication system provided by an embodiment of the present disclosure.

### DETAILED DESCRIPTION

The technical solution in the embodiments of the present disclosure will be described below in conjunction with the accompanying drawings in the embodiments of the present disclosure, and it will be apparent that the described embodiments are a part of the embodiments of the present disclosure, and not all embodiments. Based on the embodiments of the present disclosure, all other embodiments obtained by those of ordinary skill in the art without creative effort fall within the scope of protection of the present disclosure.

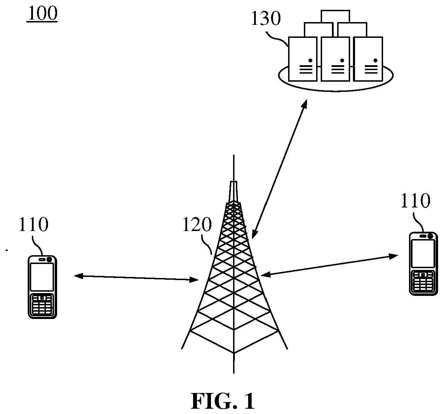

FIG. 1 is a schematic diagram of an application scenario of an embodiment of the present disclosure.

As illustrated in FIG. 1, the communication system 100 may include a terminal device 110 and a network device 120. The network device 120 may communicate with the terminal device 110 through an air interface. Multi-service transmissions are supported between the terminal device 110 and the network device 120.

It should be understood that the embodiments of the present disclosure are illustrative only with the communication system 100, but are not limited thereto. That is, the technical solution in the embodiments of the present disclosure can be applied to various communication systems, such as a long term evolution (LTE) system, a LTE time division duplex (TDD), a universal mobile telecommunications system (UMTS), an internet of things (IoT) system, a narrow band internet of things (NB-IoT) system, an enhanced machine-type communications (eMTC) system, a 5G communication system (also being referred to as a new radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with a terminal device 110 (e.g., a UE) located within the coverage area.

The network device 120 may be an evolutional node B (eNB or eNodeB) in the long term evolution (LTE) system, a next generation radio access network (NG RAN) device, a base station (gNB) in the NR system, or a wireless controller in a cloud radio access network (CRAN). The network device 120 may also be a relay station, an access point, a on-board equipment, a wearable device, a hub, a switch, a bridge, a router, or a network device in a future evolved public land mobile network (PLMN), etc.

The terminal device 110 may be any terminal device, including but not limited to a terminal device in wired or wireless connection with the network device 120 or other terminal devices.

For example, the terminal device 110 may refer to an access terminal, a user equipment (UE), a user unit, a user station, a mobile station, a remote station, a remote terminal, a mobile device, a user terminal, a terminal, a wireless communication device, a user agent or a user apparatus. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device having a wireless communication function, a computing device or other processing device connected to a wireless modem, an on-board equipment, a wearable device, a terminal device in a 5G network or a terminal device in a future evolution network, etc.

The terminal device 110 may be used for a device to device (D2D) communication.

The wireless communication system 100 may also include a core network device 130 that communicates with the base station, the core network device 130 may be a 5G core (5GC) device such as an access and mobility management function (AMF), an authentication server function (AUSF), a user plane function (UPF), or a session management function (SMF). Alternatively, the core network device 130 may also be an evolved packet core (EPC) device of the LTE network, for example, a session management function + core packet gateway (SMF + PGW-C) device. It should be understood that SMF + PGW-C can achieve same functions as the SMF and the PGW-C simultaneously. In the process of the network evolution, the core network device may also be referred to as other names, or a new network entity may be formed by dividing the functions of the core network, which is not limited by the embodiments of the present disclosure.

Communication may also be achieved between various functional units in the communication system 100 by establishing a connection through a next generation (NG) interface.

For example, the terminal device establishes air interface connection with the access network device through an NR interface, for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates a base station, a core network device and two terminal devices. Optionally, the wireless communication system 100 may include multiple base station devices, and any other number of terminal devices may be included within the coverage area of each base station, which is not limited by embodiments of the present disclosure.

It should be noted that FIG. 1 only illustrates, by way of an example, the system to which the present disclosure applies and of course the method illustrated in the embodiments of the present disclosure may also be applied to other systems. In addition, the terms "system" and "network" in the disclosure may usually be exchanged. In the disclosure, the term "and/or" is used to describe an association relationship of associated objects and represents that three relationships may exist. For example, A and/or B may represent three conditions: independent existence of A, existence of both A and B, and independent existence of B. In addition, character "/" in the disclosure usually represents that previous and next associated objects form an "or" relationship. It should also be understood that the reference to "indication" in embodiments of the present disclosure may be a direct indication or an indirect indication, and may also be an indication of an association. For example, A indicates B, may mean that A directly indicates B, for example, B can be obtained through A, may also mean that A indicates B indirectly, for example, A indicates C, and B can be obtained through C, and may also mean that there is an association between A and B. It should also be understood that the reference to "corresponding to" in embodiments of the present disclosure may mean that there is a direct or indirect correspondence relationship between two elements, may also mean that there is an association relationship between the two elements, may also be a relationship in which one element indicates or is indicated by the other element, or one element configures or is configured by the other element, etc. It should also be understood that the "predefined" or "predefined rules" referred to in embodiments of the present disclosure may be implemented by pre-storing corresponding codes, tables or other means that may be used to indicate relevant information in devices (e.g., including terminal devices and network devices), specific implementations of which are not limited herein. For example, the "pre-defined" may refer to what is defined in "protocol". It should also be understood that, in embodiments of the present disclosure, the "protocol" may refer to standard protocols in the communication field, and may include, for example, an LTE protocol, an NR protocol and related protocols applied in future communication systems, which are not limited in the present disclosure.

In order to facilitate the understanding of the technical solution of the embodiments of the disclosure, the related technologies of the embodiments of the disclosure are described below, and the following related technologies may be arbitrarily combined with the technical solution of the embodiments of the disclosure as optional schemes, all of which belong to the scope of protection of the embodiments of the disclosure.

### Principle of The Zero Power Communication Technology

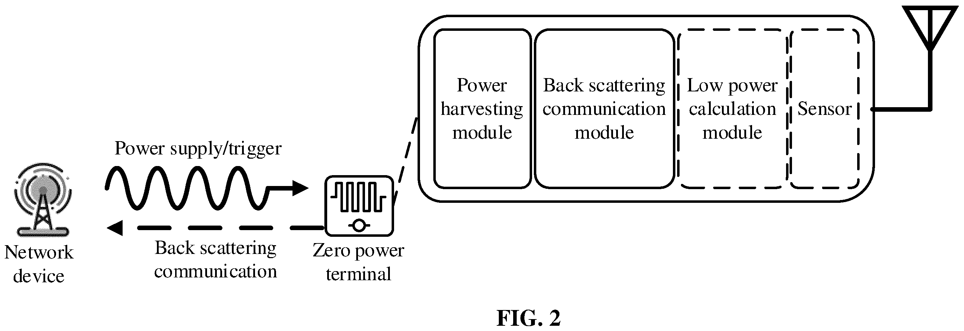

A zero power communication adopts a power harvesting communication technology and a back scattering communication technology. The zero power communication system includes a network device and a zero power terminal, as illustrated in FIG. 2. The network device is used to transmit power supply signals (i.e. radio waves), downlink communication signals and receive back scattering signals from the zero power terminal. As an example, the zero power terminal includes a power harvesting module, a back scattering communication module and a low power calculation module. In addition, the zero power terminal may also has a memory and/or a sensor, the memory is used to store some basic information (such as article identities, etc.), and the sensor is used to acquire sensing data such as the ambient temperature and the ambient humidity.

The key technologies of the zero power communication are further explained below.

### (1) Power Harvesting

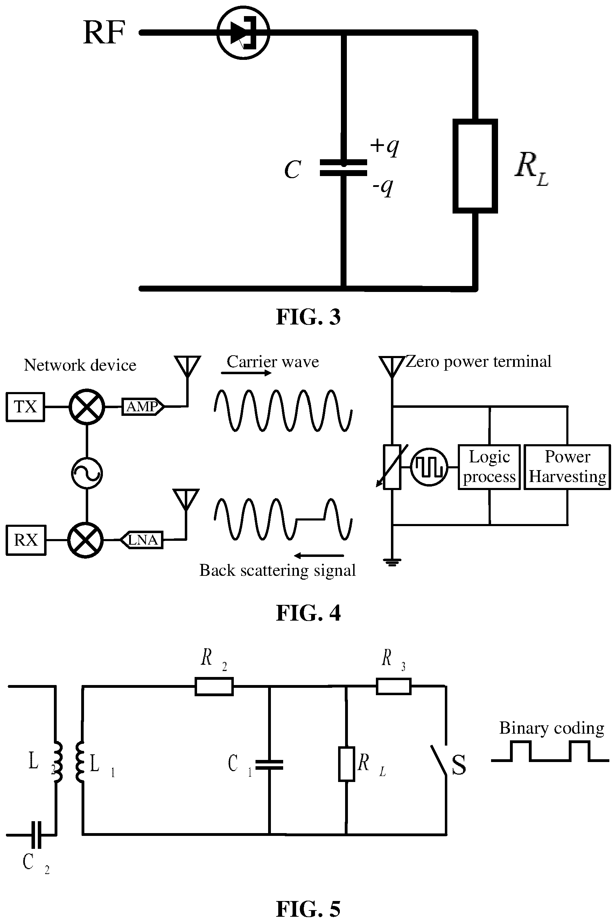

FIG. 3 is a schematic diagram of power harvesting provided by an embodiment of the present disclosure, as illustrated in FIG. 3, a power harvesting module harvests the electromagnetic wave power in space based on the electromagnetic induction principle, and obtains the power required to drive the zero power terminal to work, and thus drives the load circuits (for example, a low power calculation module, a sensor, etc.). Therefore, the zero power terminal eliminates the need for traditional batteries, and achieves a battery-free communication.

As an example, the power harvesting module refers to a radio frequency power harvesting module, which may harvest the power carried by radio waves in space, thus realizing the harvest of the space electromagnetic wave power.

### (2) Back Scattering Communication

FIG. 4 is a schematic diagram of a back scattering communication, as illustrated in FIG. 4, a zero power terminal receives a wireless signal (i.e., the carrier wave in FIG. 4) from a network device, modulates the wireless signal, (i.e., loads the information to be transmitted on the wireless signal), and radiates the modulated signal from an antenna. Such an information transmission process is referred to as the back scattering communication.

The back scattering communication is closely related to the function of load modulation. The load modulation is generally used by the zero power terminal to load information. In the load modulation, by adjusting and controlling circuit parameters of an oscillation loop of the zero power terminal according to the beats of the data stream, the magnitude and/or phase of the impedance of the zero power terminal changes accordingly, and thus completing the modulation process. Load modulation technologies mainly include a resistance load modulation and a capacitance load modulation.

As illustrated in FIG. 5, in the resistance load modulation, a load is connected in parallel with a resistor, referred to as a load modulation resistor. The resistor is switch on or off based on a control of a binary data stream. The switched on or off of the resistor results in a change in circuit voltage, thus enabling an amplitude shift keying (ASK) modulation, where the signal is modulated by adjusting the amplitude of the back scattering signal from the zero power terminal. Similarly, in the capacitance load modulation, the load is connected in parallel with a capacitor, referred to as a load modulation capacitor, and the load modulation capacitor replaces the load modulation resistor in FIG. 5. The change of the resonant frequency of the circuit can be implemented by switching the capacitor on or off, thus enabling a frequency shift keying (FSK) modulation, where the signal is modulated by adjusting the working frequency of the back scattering signal from the zero power terminal.

It can be seen that the zero power terminal perform an information modulation on the incoming signal by means of the load modulation, thus realizing the back scattering communication process. Therefore, the zero power terminal has the following significant advantages: on one hand, the zero power terminal does not actively transmit signals, and thus does not require complex RF links, such as power amplifiers, RF filters, etc. On another hand, the zero power terminal does not need to actively generate high-frequency signals, and thus does not require high-frequency crystal oscillators. On still another hand, the transmission process of the zero power terminal does not need to consume the power of the zero power terminal itself through the back scattering communication.

### Coding Method of Zero Power Communication

The data transmitted by the zero power terminal may be expressed by different forms of code to represent binary "1" and "0". Radio frequency identity systems generally use one of the following coding methods: non return zero inverted (NRZI) coding, Manchester coding, unipolar RZ coding, differential binary phase (DBP) coding, miller coding and differential coding. The use of different forms of code to represent binary "1" and "0" can also be understood as the use of different pulse signals to represent 0 and 1. Several coding methods are explained below.

### (1) NRZI Coding

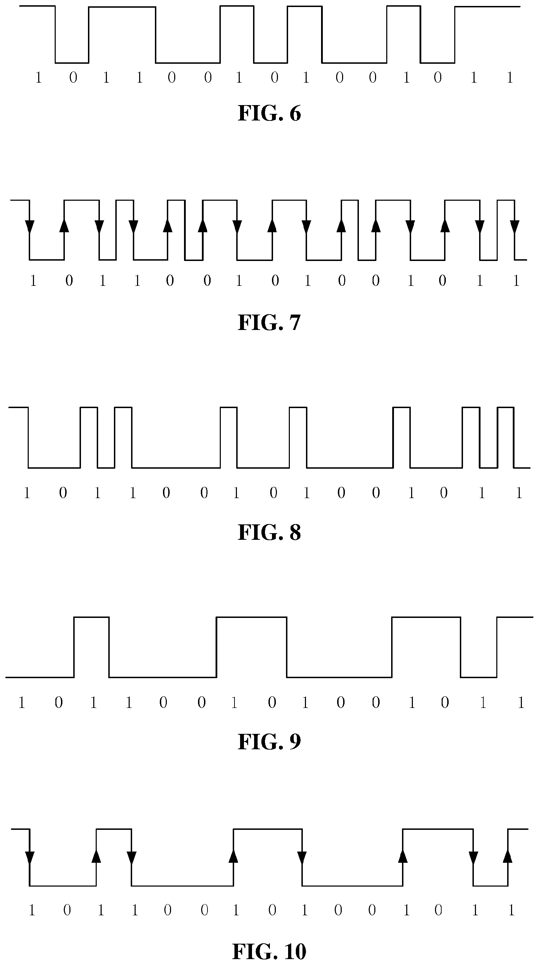

In the NRZI coding, a high level is used to represent a binary "1" and a low level is used to represent a binary "0", as illustrated in FIG. 6.

### (2) Manchester Coding

The Manchester coding is also referred to as split-phase coding. In the Manchester coding, a value of a bit is represented by a change (rise/fall) of a level over half a bit period within the bit length, a negative skip over half the bit period represents the binary "1", and the positive skip over half the bit period represents the binary "0", as illustrated in FIG. 7.

The Manchester coding is usually used for data transmissions from the zero power terminal to the network device when using the carrier load modulation or the back scattering modulation, because it is beneficial to find data transmission errors. This is because a "no change" state is not allowed within the bit length. When data bits of different values are simultaneously transmitted from multiple zero power terminals, the received rising edge and falling edge cancel each other out, resulting in an uninterrupted of the carrier signal over the entire bit length. Since such a state is not allowed, the network device can determine a specific position where a collision occurs by using this error.

### (3) Unipolar RZ Coding

In the unipolar RZ coding, a high level in the first half bit period represents the binary "1", while a low level signal lasting the entire bit period represents the binary "0", as illustrated in FIG. 8. The unipolar RZ coding may be used to extract bit synchronization signals.

### (4) DBP Coding

In the DBP coding, any edge in half the bit period represents the binary "0", while no edge represents the binary "1", as illustrated in FIG. 9. In addition, the level is inverted at the beginning of each bit period. Therefore, it is easier for a receiving terminal to reconstruct bit beats.

### (5) Miller Coding

In the Miller coding, any edge in half the bit period represents the binary "1", while a constant level over the next bit period represents the binary "0". Level alternating occurs at the beginning of the bit period, as illustrated in FIG. 10. Therefore, it is easier for a receiver to reconstruct bit beats.

### (6) Differential Coding

In the differential coding, each binary " 1" to be transmitted causes a change in a signal level, while for the binary "0", the signal level remains unchanged.

### Classification of Zero Power Terminal

Based on the power source and the manner of use of the zero power terminal, the zero power terminal may be divided into the following three types.

### (1) Passive Zero Power Terminal

The zero power terminal does not require built-in batteries. When the zero power terminal approaches a network device, the zero power terminal is within a near-field range formed by the antenna radiation of the network device. Therefore, the antenna of the zero power terminal generates induced current through the electromagnetic induction, and the induced current drives a low power calculation module (i.e., a low power chip circuit) of the zero power terminal to perform operations such as demodulation of forward link signals and modulation of backward link signals. For the back scattering link, the zero power terminal uses the back scattering implementation to transmit signals.

It can be seen that the passive zero power terminal does not require built-in batteries to drive either the forward link or the backward link, so that it is a true zero power terminal.

Because the passive zero power terminal does not require batteries, the RF circuit and the baseband circuit of the passive zero power terminal are very simple, such as a low noise amplifier (LNA), a power amplifier (PA), a crystal oscillator, an ADC, etc., so it has many advantages such as a small size, a light weight, a low price and a long service life.

### (2) Semi-Passive Zero Power Terminal

The semi-passive zero power terminal itself is not equipped with conventional batteries, but it can use a power harvesting module to harvest radio wave power and store the harvested power in a power storage unit (such as a capacitor). After obtaining the power, the power storage unit may drive a low power calculation module (i.e., a low power chip circuit) of the zero power terminal to perform operations such as demodulation of forward link signals and modulation of backward link signals. For the back scattering link, the zero power terminal uses the back scattering implementation to transmit signals.

It can be seen that the semi-passive zero power terminal does not require built-in batteries to drive either the forward link or the backward link. Although the power stored by the capacitor is used in the work, the power comes from the radio wave power harvested by the power harvesting module, so that it is also a true zero power terminal.

The semi-passive zero power terminal inherits many advantages of the passive zero power terminal, so it has many advantages such as a small size, a light weight, a low price and a long service life.

### (3) Active Zero Power Terminal

The zero power terminal used in some scenarios may also be an active zero power terminal, which may have built-in batteries. The battery is used to drive a low power calculation module (i.e., a low power chip circuit) of the zero power terminal to perform operations such as demodulation of forward link signals and modulation of backward link signals. For the back scattering link, the zero power terminal uses the back scattering implementation to transmit signals. Therefore, the zero power of such a terminal is mainly reflected in the fact that the signal transmission in the reverse link does not require any power from the terminal itself, but uses the way of the back scattering.

The active zero power terminal has built-in batteries to supply power to an RF chip, so as to increase the communication distance and improve the communication reliability. Therefore, it can be applied in some scenes with relatively high requirements on the communication distance and the communication delay.

### Cellular Passive IoT

With the increase of industrial applications, there are more and more types of connectors and application scenarios, and there will be higher requirements on the price and the power consumption of communication terminals. The application of battery-free and low-cost passive IoT devices has become a key technology of the cellular IoT, which enriches the types and number of network link terminals and truly implement the IoT. The passive IoT devices may be based on the zero power communication technology, such as a radio frequency identity (RFID) technology, and extended on this basis to be suitable for the cellular IoT.

The zero power terminal needs to harvest power from radio waves transmitted by a network device, and can drive itself to work after harvesting the power. Therefore, before obtaining the power, the zero power terminal is in a "shut down" state, that is, it cannot receive signals transmitted by the network device or transmit signals to the network device at this time.

The zero power terminal has the characteristics of limited power supply, small amount of data transmission and limited processing capacity, the requirements of the communication system are simple and applicable. However, the current communication system (such as the LTE system and the NR system) is too complex to meet the communication requirements of the zero power terminal.

Therefore, the following technical solutions of the embodiments of the present disclosure are proposed. It should be noted that the technical solutions of the embodiments of the present disclosure can be applied to 5G, 6G or future communication systems.

In order to facilitate the understanding of the technical solution of the embodiments of the present disclosure, the technical solution of the present disclosure will be described in detail below by way of specific embodiments, the above related technologies as optional solutions can be arbitrarily combined with the technical solutions of the embodiments of the present disclosure, and all of them belong to the scope of protection of the embodiments of the present disclosure. The embodiments of the present disclosure include at least some of the following.

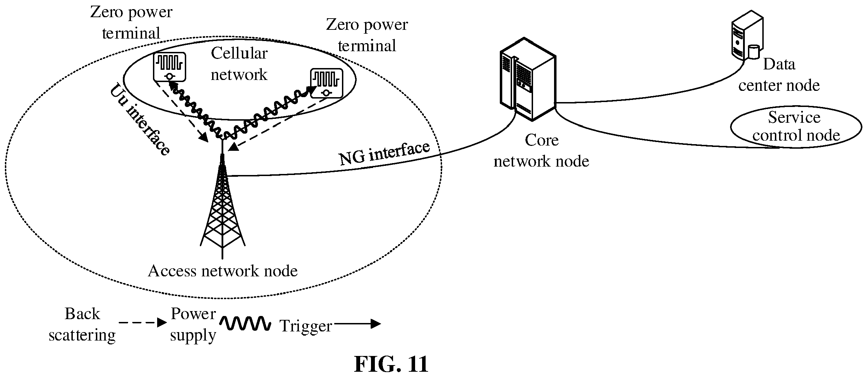

FIG. 11 is a structure diagram of a zero power communication system provided by an embodiment of the present disclosure. As illustrated in FIG. 11, the system includes at least one of: a zero power terminal, an access network node, a core network node, a data center node, or a service control node.

The zero power terminal is capable of communicating with the access network node.

The access network node is capable of communicating with at least one of the zero power terminal or the access network node.

The core network node is capable of communicating with at least one of the access network node, the data center node or the service control node.

The data center node is capable of communicating with at least one of the core network node or the service control node; and

The service control node is capable of communicating with at least one of the core network node or the data center node.

It should be noted that the zero power communication system may include all of the above functional nodes or part of the above functional nodes. Without limitation, the zero power communication system may include other functional nodes in addition to all of or part of the above functional nodes.

Each functional node in the zero power communication system is described below.

### 1) Zero Power Terminal

In some optional implementations, the zero power terminal includes a power harvesting module and a communication module. The power harvesting module is configured to harvest power from radio waves and provide the power to the communication module. The communication module is configured to perform signal transmission between the zero power terminal and the access network node.

In some optional implementations, the power harvesting module is a radio frequency (RF) power harvesting module. The zero power terminal may use the RF power harvesting module to harvest the power from the radio waves, and drive itself to work through the harvested power.

In some optional implementations, the communication module is configured to perform the signal transmission between the zero power terminal and the access network node through a back scattering communication. Here, the communication module may be a back scattering communication module, and the zero power terminal may use the back scattering communication module to transmit signals in a back scattering communication manner.

Further, optionally, the zero power terminal further includes a low power calculation module. Here as an example, the low power calculation module may include a low power demodulation module and/or a low power modulation module.

Further, optionally, the zero power terminal further includes a sensor for acquiring sensing data. Here as an example, the sensor may be a temperature sensor, a humidity sensor or the like.

In some optional implementations, the zero power terminal may be a radio frequency identification (RFID) tag.

It should be noted that the zero power terminal may be understood with reference to the aforementioned description of "zero power terminal".

### 2) Access Network Node

An access network node is a radio access network node (RAN node). As an example, the access network node may be a base station node.

In some optional implementations, the access network node may be, but is not limited to, a 5G access network node or a 6G access network node.

In some optional implementations, the access network node is configured to transmit, to the zero power terminal, radio waves for powering the zero power terminal; and/or the access network node is configured to provide, to the zero power terminal, a communication link for signal transmission between the zero power terminal and the access network node.

### 3) Core Network Node

In some optional implementations, the core network node may, but is not limited to, be a 5G core network node or a 6G core network node.

The 5G core network node is taken as an example, the core network node may include at least one of the following network elements: an AMF or a user datagram protocol (UDP).

In some optional implementations, the core network node is configured to perform at least one of: receiving data from the zero power terminal; processing data from the zero power terminal; controlling services of the zero power terminal; or managing services of the zero power terminal.

In some optional implementations, the core network node is used to provide functions such as a gateway.

### 4) Data Center Node

In some optional implementations, the data center node may be a unified data management (UDM) network element.

In some optional implementations, the data center node is configured to store at least one of: subscription data of the zero power terminal or a communication-related configuration of the zero power terminal.

Further, optionally, the communication-related configuration includes at least one of: a bearer configuration, a zero power terminal identity, a security configuration, or a service identity.

### 5) Service Control Node

In some optional implementations, the service control node may be a cellular internet of things service (CIoT service) control node.

In some optional implementations, the service control node is configured to perform at least one of: configuring a service-related configuration of the zero power terminal; managing a zero power terminal identity of the zero power terminal; or managing services of the zero power terminal.

Further, optionally, the operation of managing the services of the zero power terminal includes at least one of: enabling the services of the zero power terminal; or disabling the services of the zero power terminal.

In the embodiment of the present disclosure, an interface between the zero power terminal and the access network node is a first interface. In some optional implementations, the first interface may be referred to as a Uu interface.

In the embodiment of the present disclosure, an interface between the access network node and the core network node is a second interface. In some optional implementations, the second interface may be referred to as an NG interface.

It should be noted that the number of the above functional nodes in the zero power communication system may be one or more. For example, the number of zero power terminals in the zero power communication system may be one or more, which is not limited in the present disclosure.

In order to facilitate the communication and the service data transmission of the zero power terminal, the technical solution of the embodiment of the present disclosure specifies the following contents: an identity related to the zero power terminal, a state of the zero power terminal, a protocol stack of the zero power terminal, and the data transmission mode of the zero power terminal, which are described below.

### Identities Related To The Zero Power Terminal

### 1) Zero Power Terminal Identity

In an embodiment of the present disclosure, the zero power terminal has a zero power terminal identity, and the zero power terminal identity includes at least one of a zero power service identity, a terminal group identity, or a terminal identity.
1) In some optional implementations, the zero power terminal identity includes the zero power service identity and the terminal identity.

Here, the terminal identity is numbered in the zero power service corresponding to the zero power service identity, that is, the terminal identity uniquely identifies a zero power terminal within the zero power service corresponding to the zero power service identity.

It should be noted that the description of "terminal identity" in the embodiment of the present disclosure may also be replaced with "UE id".

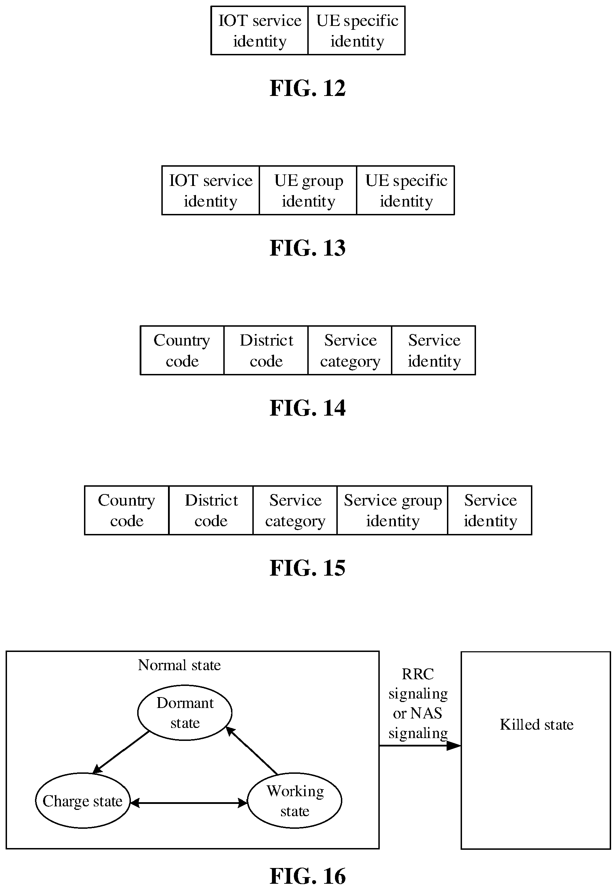

As an example, as illustrated in FIG. 12, the zero power terminal identity includes an IOT service identity (IoT service id) and a UE specific identity (UE specific id), where the IoT service id is the zero power service identity and the UE specific id is the terminal identity.

2) In some optional implementations, the zero power terminal identity includes the zero power service identity, the terminal group identity and the terminal identity.

Here, a zero power service corresponding to the zero power service identity is associated with one or more terminal groups, and each terminal group has a terminal group identity. The terminal identity is numbered in the terminal group corresponding to the terminal group identity, that is, the terminal identity uniquely identifies a zero power terminal in the terminal group corresponding to the terminal group identity.

It should be noted that the description of "terminal identity" in the embodiment of the present disclosure may also be replaced with "UE id".

It should be noted that the description of "terminal group identity" in the embodiment of the present disclosure may also be replaced with "UE group id".

As an example, as illustrated in FIG. 13, the zero power terminal identity includes an IOT service identity (IoT service id), a UE group identity (UE group id), and a UE specific identity (UE specific id), where the IoT service id is the zero power service identity, the UE group id is the terminal group identity, and the UE specific id is the terminal identity.

### 2) Zero Power Service Identity

In the embodiment of the present disclosure, the zero power service identity includes at least one of: a country code, a district code, a service category, a service group identity or a service identity.

1) In some optional implementations, as illustrated in FIG. 14, the service identity includes the country code, the district code, the service category and the service id.

2) In some optional implementations, as illustrated in FIG. 15, the service identity includes the country code, the district code, the service category, the service group id and the service id.

It should be noted that the solutions associated with the zero power service identity can be combined with the solutions associated with the zero power terminal identity.

### 3) Group Identity of The Zero Power Terminal

1) In some optional implementations, the group identity of the zero power terminal includes the zero power service identity and the terminal group identity.

Here, the zero power service corresponding to the zero power service identity is associated with one or more terminal groups, and each terminal group has one terminal group identity. The terminal group identity is numbered in the zero power service corresponding to the zero power service identity, that is, the terminal group identity uniquely identifies one terminal group in the zero power service corresponding to the zero power service identity. Therefore, the group identity of the zero power terminal includes a zero power service identity and a terminal group identity, and one terminal group can be absolutely uniquely identified by the group identity of the zero power terminal.

2) In some optional implementations, the group identity of the zero power terminal is identified by a numerical value.

Here, one terminal group can be uniquely identified by one numeric value (e.g. an integer value), and the numeric value can be understood as the group identity of the zero power terminal, as well as the terminal group identity. One terminal group can be absolutely uniquely identified by the group identity of the zero power terminal.

In the above solution, the terminal group includes one or more zero power terminals.

### 4) Group Identity of The Service of The Zero Power Terminal

1) In some optional implementations, the group identity of the service of the zero power terminal includes the country code, the district code, the service category and the service group identity.

Here, a set of country codes, district codes and service category are associated with one or more service groups, each service group has one service group identity. Therefore, the group identity of the service of the zero power terminal includes the country code, the district code, the service category, and the service group identity. One service group can be absolutely uniquely identified by the group identity of the service of the zero power terminal.

2) In some optional implementations, the group identity of the service of the zero power terminal is identified by the numerical value.

Here, one service group can be uniquely identified by one numeric value (e.g. an integer value), and the numeric value can be understood as the group identity of the service of the zero power terminal, and can also be understood as the service group identity. One service group can be absolutely uniquely identified by the group identity of the service of the zero power terminal.

In the above solution, the service group includes one or more services.

### State of The Zero Power Terminal

In an embodiment of the present disclosure, the zero power terminal includes at least one of: a first state corresponding to a normal state of the zero power terminal; or a second state corresponding to a killed state of the zero power terminal.

Here, the normal state may also be referred to as an active state or a valid state.

Here, the killed state may also be referred to as a deactivated state or an invalid state.

Here, the zero power terminal includes a first state and a second state in terms of an application level or a non-access (NAS) level. As an example, as illustrated in FIG. 16, the zero power terminal include the normal state and the killed state.

In some optional implementations, when the zero power terminal is in the first state, the zero power terminal has at least one of the following characteristics.

Configuration information of the zero power terminal is stored in the zero power terminal and the data center node.

A power harvesting module and/or a communication module of the zero power terminal start to work.

Here, when the zero power terminal is put into use, the zero power terminal is in the first state, and configuration information, such as a relevant identity of the zero power terminal, a security configuration and other information, related to the zero power terminal is written into the zero power terminal and the data center node simultaneously. At the same time, the zero power terminal can be switched on at any time to use the power harvesting module to harvest the power from the radio waves.

In some optional implementations, when the zero power terminal is in the second state, the zero power terminal has at least one of the following characteristics.

Configuration information of the zero power terminal in the data center node is deleted.

The power harvesting module and the communication module of the zero power terminal stop working.

The zero power terminal identity of the zero power terminal is reclaimed.

Here, when the use of the zero power terminal is finished, the zero power terminal is in the second state, and the zero power terminal identity of the zero power terminal is reclaimed or recovered. At the same time, the power harvesting module of the zero power terminal stops working. At the same time, the configuration information of the zero power terminal stored in the data center node is released and deleted.

Further, in some optional implementations, the first state includes at least one of: a dormant state, a charge state, or a working state.

Here, in terms of the AS level, the state of the zero power terminal are categorized into a dormant state, a charge state and a working state. As an example, as illustrated in FIG. 16, the zero power terminal can transition between these three states. It should be noted that all these three states are normal states at the application level or the NAS level.

In some optional implementations, when the zero power terminal is in the dormant state, a following characteristic exists.

The power harvesting module of the zero power terminal is ready to be enabled to harvest power from radio waves.

Here, the default state in which the zero power terminal is put into use is the dormant state. At this time, the zero power terminal is in an unpowered state, and it is ready to be enabled to harvest the power from the radio waves using the power harvesting module.

In some optional implementations, when the zero power terminal is in the charge state, a following characteristic exists.

The power harvesting module of the zero power terminal is enabled to harvest power from the radio waves.

Here, the charge state refers to a state in which the power harvesting module of the zero power terminal starts to harvest the power from the radio waves.

In some optional implementations, when the zero power terminal is in the working state, the zero power terminal has a following characteristic.

The communication module of the zero power terminal is enabled to perform signal transmission between the zero power terminal and the access network node.

Here, the working state refers to a state in which a communication is performed between the zero power terminal and the access network node. As an example, the communication between the zero power terminal and the access network node includes a downlink communication and/or a uplink communication. Here, for the downlink communication, the zero power terminal receives signals transmitted from the access network node. For the uplink communication, the zero power terminal transmits signals to the access network node.

In an embodiment of the present disclosure, the zero power terminal is capable of transitioning between any two of the dormant state, the charge state and the working state.

Here, since the dormant state, the charge state and the working state are states of the zero power terminal in the AS layer, there is no need to notify a network side when the zero power terminal transitions between these three states, that is, it is transparent to the network side.

In an embodiment of the present disclosure, the zero power terminal is capable of transitioning from the first state to the second state. Further, optionally, the zero power terminal transitions from the first state to the second state based on a command from the network side. As an example, the command from the network side is NAS signaling or radio resource control (RRC) signaling.

Here, the zero power terminal in the first state may be caused to enter the second state by the command (e.g., the NAS signaling, the RRC signaling, etc.) from the network side. It should be noted that the zero power terminal in the second state is not allowed to make an inverse transition to the first state.

### Protocol Stacks of The Zero Power Terminal

### Control Plane Protocol Stack

In an embodiment of the present disclosure, the control plane protocol stack is defined to meet the communication requirements of the zero power terminal,. Here, if no direct communication is required between the zero power terminal and the core network node (such as the AMF), the non-access stratum (NAS) layer may not be used. At the same time, the radio link control (RLC) layer and the packet data convergence protocol (PDCP) layer may not be used for signaling transmission if there is no frequent signaling transmission or no security requirement for the signaling transmission, or if the security requirement for signaling transmission is completed in the upper layer, the radio link control (RLC) layer and the packet data convergence protocol (PDCP) layer may not be adopted. In addition, if the radio resource control (RRC) layer is responsible for the functions of the media access control (MAC) layer, the MAC layer may not be adopted. Therefore, according to the characteristics of the zero power terminal, its control plane protocol stack may have the following selections.

### 1) First Manner

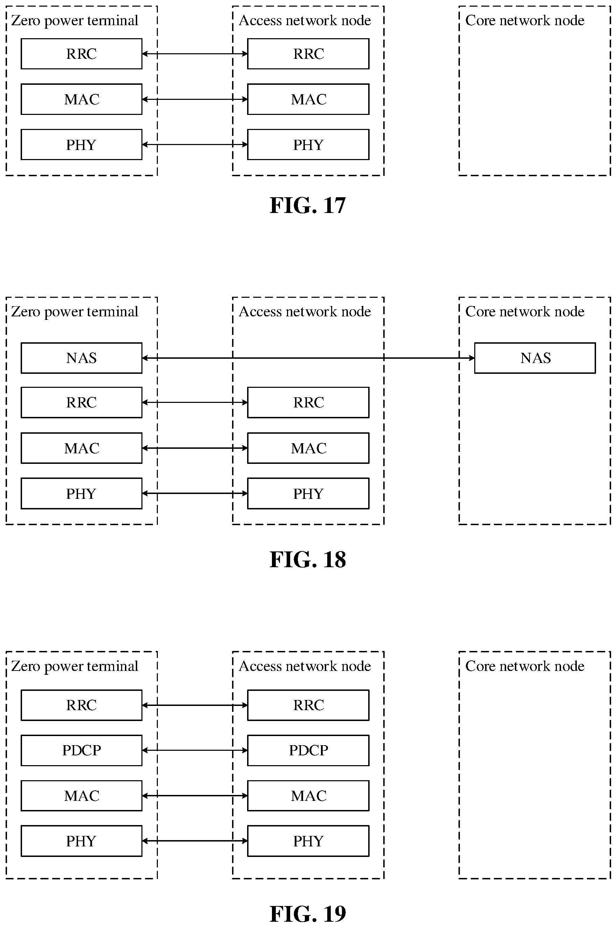

As illustrated in FIG. 17, the control plane protocol stack between the zero power terminal and the access network node includes an RRC layer, a MAC layer, and a physical (PHY) layer. There is no control plane protocol stack between the zero power terminal and the core network node.

In some optional implementations, the functions of the RRC layer include at least one of: transmission of RRC signaling for carrying downlink signaling and/or uplink signaling; or segmentation of RRC signaling to be transmitted into segments, each segment corresponds to a respective segmentation number. The RRC signaling is associated with a serial number.

Here, the RRC signaling is used for the zero power terminal to receive the downlink signaling transmitted by the network side and/or for the zero power terminal to transmit the uplink signaling to the network side. If the RRC signaling is relatively large, the RRC layer may segment the RRC signaling to be transmitted into segments, each segment has a corresponding segment number. Each RRC signaling has an associated serial number.

In some optional implementations, the MAC layer includes at least one of the following functions: multiplexing process of data and/or signaling; demultiplexing process of data and/or signaling; submitting of a transport block (TB) to the PHY layer; or segmentation process of a TB.

Here, the MAC layer is used for multiplexing data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

### 2) Second manner

As illustrated in FIG. 18, the control plane protocol stack between the zero power terminal and the access network node includes an RRC layer, a MAC layer and a PHY layer. The control plane protocol stack between the zero power terminal and the core network node includes a NAS layer.

In some optional implementations, the RRC layer include at least one of the following functions: transmission of RRC signaling for carrying downlink signaling and/or uplink signaling; or segmentation of RRC signaling to be transmitted into segments, each segment corresponding to a respective segmentation number. The RRC signaling is associated with a serial number.

Here, the RRC signaling is used for the zero power terminal to receive the downlink signaling transmitted by the network side and/or for the zero power terminal to transmit the uplink signaling to the network side. If the RRC signaling is relatively large, the RRC layer may segment the RRC signaling to be transmitted, each segment has a corresponding segment number. Each RRC signaling has an associated serial number.

In some optional implementations, the MAC layer includes at least one of the following functions: multiplexing of data and/or signaling; demultiplexing of data and/or signaling; submitting of a transport block (TB) to the PHY layer; or segmentation of a TB.

Here, the MAC layer is used for multiplexing the data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

In some optional implementations, the NAS layer is used to transmit NAS signaling for performing at least one of: carrying data and/or signaling, information reporting from the zero power terminal to the core network node, or information transmission from the core network node to the zero power terminal.

### 3) Third Manner

As illustrated in FIG. 19, the control plane protocol stack between the zero power terminal and the access network node includes an RRC layer, a PDCP layer, a MAC layer and a PHY layer. There is no control plane protocol stack between the zero power terminal and the core network node.

In some optional implementations, the RRC layer includes at least one of the following functions: transmission of RRC signaling for carrying downlink signaling and/or uplink signaling; or segmentation of RRC signaling to be transmitted into segments, and each segment corresponds to a respective segmentation number. The RRC signaling is associated with a serial number.

Here, the RRC signaling is used for the zero power terminal to receive the downlink signaling transmitted from the network side, and/or the RRC signaling is used for the zero power terminal to transmit the uplink signaling to the network side. If the RRC signaling is relatively large, the RRC layer may segment the RRC signaling to be transmitted, each segment has a corresponding segmentation number. Each RRC signaling has an associated serial number.

In some optional implementations, the PDCP layer includes at least one of the following functions: security protection, reordering, duplicate detection, or serial number (SN) maintenance.

In some optional implementations, the MAC layer includes at least one of the following functions: multiplexing of data and/or signaling; demultiplexing of data and/or signaling; submitting of a transport block (TB) to the PHY layer; or segmentation of a TB.

Here, the MAC layer is used for multiplexing the data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

### 4) Fourth Manner

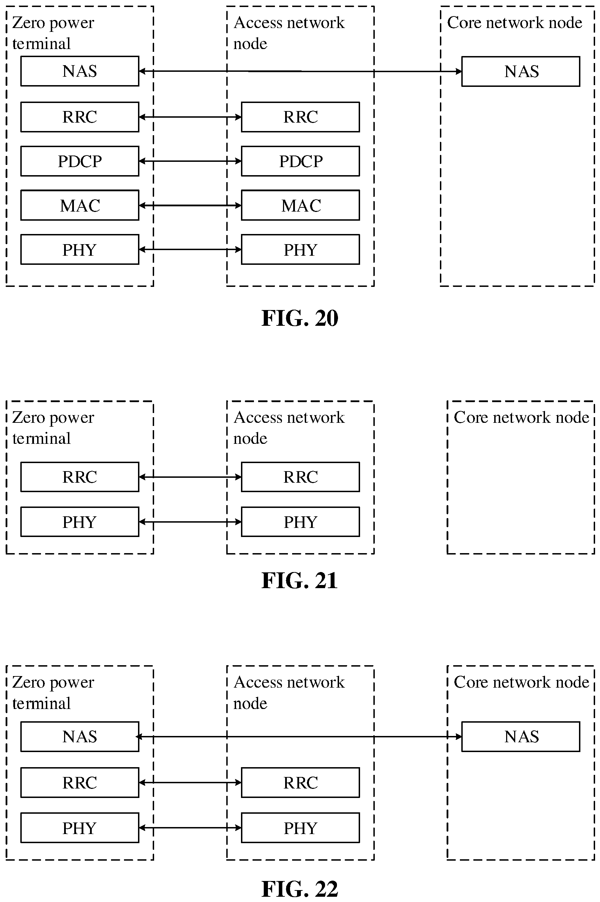

As illustrated in FIG. 20, the control plane protocol stack between the zero power terminal and the access network node includes an RRC layer, a PDCP layer, a MAC layer and a PHY layer. The control plane protocol stack between the zero power terminal and the core network node includes a NAS layer.

In some optional implementations, the RRC layer includes at least one of the following functions: transmission of RRC signaling for carrying downlink signaling and/or uplink signaling; or segmentation of RRC signaling to be transmitted into segments, and each segment corresponds to a respective segmentation number. The RRC signaling is associated with a serial number.

Here, the RRC signaling is used for the zero power terminal to receive the downlink signaling transmitted from the network side, and/or the RRC signaling is used for the zero power terminal to transmit the uplink signaling to the network side. If the RRC signaling is relatively large, the RRC layer may segment the RRC signaling to be transmitted, each segment has a corresponding segmentation number. Each RRC signaling has an associated serial number.

In some optional implementations, the PDCP layer includes at least one of the following functions: security protection, reordering, duplicate detection, or serial number (SN) maintenance.

In some optional implementations, the MAC layer includes at least one of the following functions: multiplexing of data and/or signaling; demultiplexing of data and/or signaling; submitting of a transport block (TB) to the PHY layer; or segmentation of a TB.

Here, the MAC layer is used for multiplexing the data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

In some optional implementations, the NAS layer is configured to transmit NAS signaling for performing at least one of: carrying data and/or signaling, information reporting from the zero power terminal to the core network node, or information transmission from the core network node to the zero power terminal.

### 5) Fifth Manner

As illustrated in FIG. 21, the control plane protocol stack between the zero power terminal and the access network node includes an RRC layer and a PHY layer. There is no control plane protocol stack between the zero power terminal and the core network node.

In some optional implementations, the RRC layer include at least one of the following functions: transmission of RRC signaling for carrying downlink signaling and/or uplink signaling; segmentation of RRC signaling to be transmitted into segments, and each segment corresponds to a respective segmentation number, and the RRC signaling is associated with a serial number; multiplexing of data and/or signaling; demultiplexing of data and/or signaling; submitting of a transport block (TB) to the PHY layer; or segmentation of a TB.

Here, the RRC layer includes the functions of the original RRC layer and the functions of the MAC layer.

In some optional implementations, the PHY layer includes at least one of the following functions: data processing or data transmission.

### 6) Sixth manner

As illustrated in FIG. 22, the control plane protocol stack between the zero power terminal and the access network node includes an RRC layer and a PHY layer. The control plane protocol stack between the zero power terminal and the core network node includes a NAS layer.

In some optional implementations, the RRC layer includes at least one of the following functions: transmission of RRC signaling for carrying downlink signaling and/or uplink signaling; segmentation of RRC signaling to be transmitted into segments, and each segment corresponds to a respective segmentation number, and the RRC signaling is associated with a serial number; multiplexing of data and/or signaling; demultiplexing of data and/or signaling; submitting of a transport block (TB) to the PHY layer; or segmentation of a TB.

Here, the RRC layer includes the functions of the original RRC layer and the functions of the MAC layer.

In some optional implementations, the PHY layer includes at least one of the following functions: data processing or data transmission.

In some optional implementations, the NAS layer is used to transmit NAS signaling for performing at least one of: carrying data and/or signaling, information reporting from the zero power terminal to the core network node, or information transmission from the core network node to the zero power terminal.

It should be noted that the core network node in the above solutions may be the AMF, and 5G is taken as an example here. But not limited to this, the core network node may also be other network elements in 6G.

### User plane protocol stack

In the embodiment of the present disclosure, the user plane protocol stack is defined to meet the communication requirements of the zero power terminal. According to the characteristics of zero power terminal, its user plane protocol stack may have the following selections.

### 1) First Manner

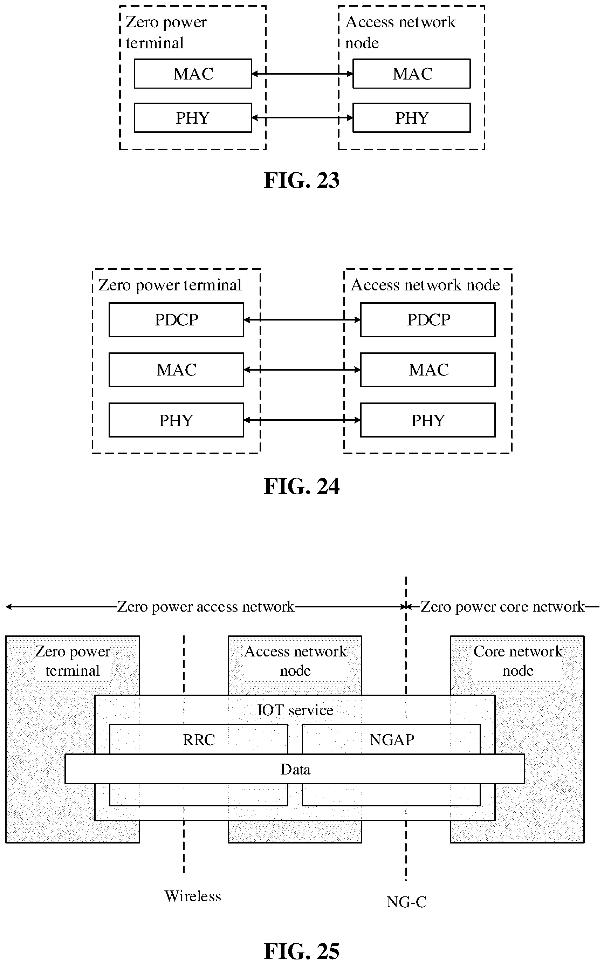

As illustrated in FIG. 23, the user plane protocol stack between the zero power terminal and the access network node includes a MAC layer and a PHY layer.

In some optional implementations, the MAC layer includes at least one of the following functions: multiplexing of data and/or signaling; demultiplexing of data and/or signaling; submitting of a transport block (TB) to the PHY layer; or segmentation of a TB.

Here, the MAC layer is used for multiplexing the data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

### 2) Second Manner

As illustrated in FIG. 24, the user plane protocol stack between the zero power terminal and the access network node includes a PDCP layer, a MAC layer, and a PHY layer.

In some optional implementations, the PDCP layer includes at least one of the following functions: security protection, reordering, duplicate detection, or serial number (SN) maintenance.

In some optional implementations, the MAC layer includes at least one of the following functions: multiplexing of data and/or signaling; demultiplexing of data and/or signaling; submitting of a transport block (TB) to the PHY layer; or segmentation of a TB.

Here, the MAC layer is used for multiplexing the data and/or the signaling in the TB, and delivering the TB to the PHY layer. If the TB formed is large, the MAC layer may perform segmentation for the TB.

In some optional implementations, the PHY layer includes at least one of the following functions: data processing or data transmission.

### Data transmission mode of zero power terminal

In the embodiment of the present disclosure, the data transmission mode corresponding to the zero power terminal includes a first transmission mode and/or a second transmission mode.

In some optional implementations, the first transmission mode refers to: data transmission between the zero power terminal and the access network node through radio resource control (RRC); and data transmission between the access network node and the core network node through next generation application protocol (NGAP) signaling.

In some optional implementations, the second transmission mode refers to: data transmission between the zero power terminal and the access network node through a data resource bearer (DRB); and data transmission between the access network node and the core network node through a general packet radio service tunneling protocol (GTP) tunnel.

In an embodiment of the present disclosure, the core network node is configured to transmit data of the zero power terminal to the service control node or transmit data of at least one zero power terminal including the zero power terminal to the service control node, based on an address of the service control node.

In an embodiment of the present disclosure, the following two quality of service (QoS) models and corresponding bearers may be defined according to the data transmission mode of the zero power terminal.
1) QoS model corresponding to the first transmission mode
   As illustrated in FIG. 25, 1. the data to be transmitted is transmitted from the zero power terminal to the access network node through RRC signaling; 2. the access network node transmits the data to the core network node through NGAP signaling; 3. the core network node transmits the data to the service control node according to an IP address of the service control node, or the core network node packages and transmits the collected data uploaded by multiple zero power terminals to the service control node.
2) The QoS model corresponding to the second transmission mode and corresponding bearers

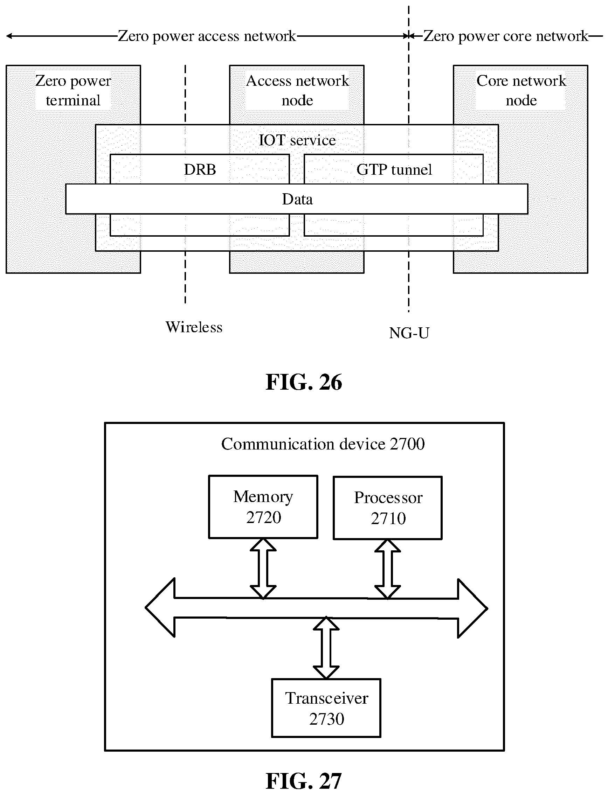

As illustrated in FIG. 26, 1. the data to be transmitted is transmitted from the zero power terminal to the access network node through a DRB; 2. the access network node transmits the data to the core network node through a GTP tunnel; 3. the core network node transmits the data to the service control node according to an IP address of the service control node, or the core network node packages and transmits the collected data uploaded by multiple zero power terminals to the service control node. Here, the GTP tunnel is also the NG-U tunnel.

It should be noted that since the amount of data of the zero power terminal is small, only one DRB is required.

The network architecture of the zero power communication system in which the zero power terminal is located is clarified in the technical solution of the embodiment of the present disclosure, and the relevant identities of the zero power terminal, the states of the zero power terminal, the control plane protocol stacks and the user plane protocol stacks of the zero power communication, and the data transmission modes of the zero power terminal are further clarified, so that the communication of the zero power terminal becomes possible.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solution of the present disclosure, and these simple modifications all fall within the scope of protection of the present disclosure. For example, various specific technical features described in the above specific embodiments may be combined in any suitable manner without contradiction, and various possible combinations are not further described in the present disclosure to avoid unnecessary repetition. For another example, any combination may be made between the various embodiments of the present disclosure as long as it does not depart from the idea of the present disclosure and is also to be regarded as the disclosure of the present disclosure. For another example, various embodiments described in the present disclosure and/or the technical features in various embodiments can be arbitrarily combined with the prior art without conflict, and the technical solution obtained after the combination should also fall within the scope of protection of the present disclosure.

It should also be understood that in the various method embodiments of the present disclosure, the size of the sequence number of the above-mentioned processes does not mean an order of an execution, and the order of execution of the processes should be determined by their functions and inherent logics, and should not constitute a limitation on the implementation process of the embodiments of the present disclosure. Further, in embodiments of the present disclosure, the terms "downlink", "uplink" and "side link" are used to denote transmission directions of signals or data, where "downlink" is used to denote that the transmission direction of signals or data is a first direction from a site to a user equipment of a cell, "uplink" is used to denote that the transmission direction of signals or data is a second direction from a user equipment of a cell to a site, and "side link" is used to denote that the transmission direction of signals or data is a third direction from a first user equipment to a second user equipment. For example, "downlink signal" means that the transmission direction of the signal is the first direction. In addition, in embodiments of the present disclosure, the term "and/or" is used for describing an association relationship of associated objects and represents that three relationships may exist. For example, A and/or B may represent three conditions: the independent existence of A, the existence of both A and B, and the independent existence of B. In addition, the character "/" in the disclosure usually represents that the previous and next associated objects form an "or" relationship.

The embodiment of the present disclosure also provides a communication method, which is applied to the zero power communication system in the solution of the present application. The method includes the following operation: the zero power terminal communicates with at least one of the core network node, the data center node or the service control node through the access network node.

FIG. 27 is a schematic structural diagram of a communication device 2700 provided by an embodiment of the present disclosure. The communication device may be a terminal device (such as a zero power terminal) or a network device (such as an access network node, a core network node, a data center node, or a service control node). The communication device 2700 illustrated in FIG. 27 includes a processor 2710 that may call and run a computer program from a memory to implement the method in the embodiments of the present disclosure.

Optionally, as illustrated in FIG. 27, the communication device 2700 may further include a memory 2720. The processor 2710 may call and run a computer program from the memory 2720 to implement the method in the embodiments of the present disclosure.

The memory 2720 may be a separate device independent of the processor 2710 or may be integrated into the processor 2710.

Optionally, as illustrated in FIG. 27, the communication device 2700 may also include a transceiver 2730. The processor 2710 may control the transceiver 2730 to communicate with other devices. Specifically, the transceiver 2730 may transmit the information or data to other devices or receive the information or data from other devices.

The transceiver 2730 may include a transmitter and a receiver. The transceiver 2730 may further include one or more antennas.

Optionally, the communication device 2700 can be specifically a network device according to the embodiments of the present disclosure, and the communication device 2700 can realize the corresponding processes realized by the network device in various methods according to the embodiments of the present disclosure. For the sake of simplicity, it will not be elaborated herein.

Optionally, the communication device 2700 can be a zero power terminal according to the embodiments of the present disclosure, and the communication device 2700 may realize corresponding processes realized by the zero power terminal in various methods according to the embodiments of the present disclosure. For the sake of brevity, it will not be described herein.

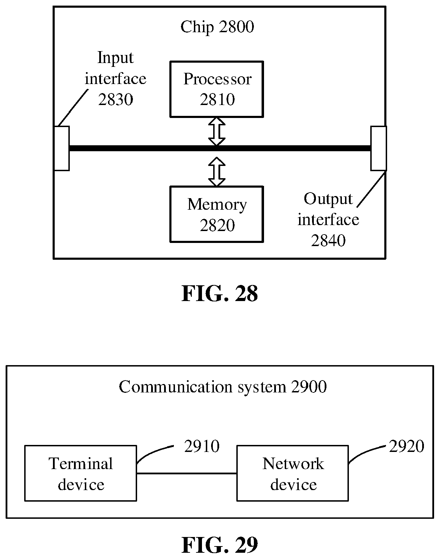

FIG. 28 is a schematic structural diagram of a chip 2800 according to an embodiment of the present disclosure. The chip 2800 illustrated in FIG. 28 includes a processor 2810. The processor 2810 may call and run computer programs from a memory to implement the method in the embodiments of the present disclosure.

Optionally, as illustrated in FIG. 28, the chip 2800 may further include a memory 2820. The processor 2810 may call and run the computer program from the memory 2820 to implement the method in the embodiments of the present disclosure.

The memory 2820 may be a separate device independent of the processor 2810 or may be integrated into the processor 2810.

Optionally, the chip 2800 may further include an input interface 2830. The processor 2810 may control the input interface 2830 to communicate with other devices or chips, and in particular to obtain the information or data transmitted from other devices or chips.

Optionally, the chip 2800 may further include an output interface 2840. The processor 2810 may control the output interface 2840 to communicate with other devices or chips, and in particular to output the information or data to other devices or chips.

Optionally, the chip may be applied to the network device in the embodiments of the present disclosure, and the chip may implement the corresponding processes implemented by the network device in various methods according to the embodiments of the present disclosure, which are not described repeatedly for the sake of brevity.

Optionally, the chip may be applied to the zero power terminal in the embodiments of the present disclosure, and the chip may implement the corresponding processes implemented by the zero power terminal in various methods according to the embodiments of the present disclosure, which are not described repeatedly for the sake of brevity.

It should be noted that the chip mentioned in the embodiments of the present disclosure can also be referred to as a system level chip, a system chip, a chip system or an system-on-chip, etc.

FIG. 29 is a schematic block diagram of a communication system 2900 provided according to an embodiment of the present disclosure. As illustrated in FIG. 29, the communication system 2900 includes a terminal device 2910 and a network device 2920.

The terminal device 2910 may be used to implement the corresponding functions implemented by the zero power terminal in the above methods, and the network device 2920 may be used to implement the corresponding functions implemented by the network device in the above methods, which are not described repeatedly for the sake of brevity.

It is to be understood that the processor in the embodiments of the present disclosure may be an integrated circuit chip having signal processing capability. In the implementation process, various operations in the above method embodiments can be implemented by an integrated logic circuit of hardware in the processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, and discrete hardware components. Various methods, operations and logic block diagrams disclosed in the embodiments of the present disclosure may be implemented or executed by the general purpose processor. The general purpose processor may be a microprocessor or the processor may be any conventional processor or the like. The operations of the methods disclosed in connection with the embodiments of the present disclosure may be directly implemented by a hardware decoding processor, or by a combination of the hardware and software modules in the decoding processor. The software module may be located in a random memory, a flash memory, a read-only memory, a programmable read-only memory or an electrically erasable programmable memory, a register and other mature storage media in the art. The storage medium is located in the memory, and the processor reads the information in the memory and implements the operations of the above methods in combination with its hardware.

It is to be understood that the memory in the embodiments of the present disclosure may be a volatile memory or a non-volatile memory, or may include both a volatile and a non-volatile memory. The nonvolatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. It is exemplarily but unlimitedly described that RAMs in various forms may be adopted, such as a static ram (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It is to be noted that the memory of the systems and methods described herein is intended to include, but is not limited to, memories of these and any other suitable type.

It is to be understood that the above memory is described by way of exemple but without limitation. For example, the memory in the embodiments of the disclosure may also be SRAM, DRAM, SDRAM, DDR SDRAM, ESDRAM, SLDRAM, DR RAM, etc. That is, the memory in the embodiments of the disclosure is intended to include, but is not limited to, memories of these and any other suitable type.

The embodiments of the disclosure further provide a computer-readable storage medium for storing computer programs.

Optionally, the computer-readable storage medium may be applied to the network device of the embodiments of the present disclosure. The computer programs causes a computer to perform the corresponding processes implemented by the network device in various methods of the embodiments of the present disclosure, which will not be elaborated herein for brief description.

Optionally, the computer-readable storage medium may be applied to the zero power terminal of the embodiments of the present disclosure. The computer programs causes a computer to perform the corresponding processes implemented by the zero power terminal in various methods of the embodiments of the present disclosure, which will not be elaborated herein for brief description.

The embodiments of the disclosure further provide a computer program product including computer program instructions.

Optionally, the computer program product may be applied to the network device of the embodiments of the present disclosure. The computer program instructions cause a computer to perform the corresponding processes implemented by the network device in various methods of the embodiments of the present disclosure, which will not be elaborated herein for brief description.

Optionally, the computer program product may be applied to the zero power terminal of the embodiments of the present disclosure. The computer program instructions cause a computer to perform the corresponding processes implemented by the zero power terminal in various methods of the embodiments of the present disclosure, which will not be elaborated herein for brief description.

The embodiments of the disclosure further provide a computer program.

Optionally, the computer program may be applied to the network device of the embodiments of the present disclosure. The computer program, when executed by a computer, causes the computer to perform the corresponding processes implemented by the network device in various methods of the embodiments of the present disclosure, which will not be elaborated herein for brief description.

Optionally, the computer program may be applied to the zero power terminal of the embodiments of the present disclosure. The computer program, when executed by a computer, causes the computer to perform the corresponding processes implemented by the zero power terminal in various methods of the embodiments of the present disclosure, which will not be elaborated herein for brief description.

Those of ordinary skill in the art may realize that the units and algorithm operations of various examples described in combination with the embodiments disclosed in the disclosure may be implemented by electronic hardware or a combination of computer software and the electronic hardware. Whether these functions are executed in a hardware or software manner depends on the specific applications and design constraints of the technical solutions. Professionals may realize the described functions for each specific application by use of different methods, but such realization shall fall within the scope of the disclosure.

Those skilled in the art may clearly learn about that regarding the operation processes of the system, device and unit described above, reference may be made to the corresponding processes in the method embodiments and will not be elaborated herein for convenient and brief description.

In some embodiments provided by the disclosure, it is to be understood that the disclosed system, device and method may be implemented in other manners. For example, the device embodiment described above is only schematic, and for example, the division of the units is only logical function division, and other division manners may be adopted during practical implementation. For example, multiple units or components may be combined or integrated into another system, or some characteristics may be neglected or not executed. In addition, the coupling or direct coupling or communication connection between various represented or discussed components may be indirect coupling or communication connection of the device or the units implemented through some interfaces, and may be electrical and mechanical or adopt other forms.

The units described as separate parts may or may not be physically separated, and parts represented as units may or may not be physical units, that is, the parts may be located in the same place, or may also be distributed to multiple network units. Some or all of the units may be selected according to a practical requirement to achieve the purpose of the solutions of the embodiments.

In addition, various functional units in various embodiments of the disclosure may be integrated into one processing unit, each unit may also physically exist independently, and two or more than two units may also be integrated into one unit.

When realized in the form of a software functional unit and sold or used as a stand-alone product, the function may also be stored in a computer-readable storage medium. Based on such an understanding, the technical solutions of the disclosure substantially or in parts making contributions to the conventional art or part of the technical solutions may be embodied in the form of a software product, and the computer software product is stored in a storage medium including multiple instructions to cause a computer device (which may be a personal computer, a server, a network device or the like) to perform all or some of the operations of the methods in various embodiments of the disclosure. The abovementioned storage medium includes: various media capable of storing program codes such as a U-disk, a mobile hard disk, a ROM, a RAM, a magnetic disk or an optical disk.

The above is only the specific mode of implementation of the disclosure and is not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A zero power communication system, comprising at least one of: a zero power terminal, an access network node, a core network node, a data center node or a service control node, wherein
the zero power terminal is capable of communicating with the access network node;
the access network node is capable of communicating with at least one of the zero power terminal or the access network node;
the core network node is capable of communicating with at least one of the access network node, the data center node or the service control node;
the data center node is capable of communicating with at least one of the core network node or the service control node; and
the service control node is capable of communicating with at least one of the core network node or the data center node.

2. The system of claim 1, wherein the zero power terminal comprises a power harvesting module and a communication module, wherein
the power harvesting module is configured to harvest power from radio waves and provides the power to the communication module; and
the communication module is configured to perform signal transmission between the zero power terminal and the access network node.

3. The system of claim 2, wherein the power harvesting module is a radio frequency (RF) power harvesting module.

4. The system of claim 2 or 3, wherein the communication module is configured to perform the signal transmission between the zero power terminal and the access network node through back scattering communication.

5. The system of any one of claims 1 to 4, wherein the access network node is configured to perform at least one of:
transmitting, to the zero power terminal, radio waves for powering the zero power terminal; or
providing, to the zero power terminal, a communication link for signal transmission between the zero power terminal and the access network node.

6. The system of any one of claims 1 to 5, wherein the core network node is configured to perform at least one of:
receiving data from the zero power terminal;
processing data from the zero power terminal;
controlling services of the zero power terminal; or
managing services of the zero power terminal.

7. The system of any one of claims 1 to 6, wherein the data center node is configured to store at least one of:
subscription data of the zero power terminal, or a communication-related configuration of the zero power terminal.

8. The system of claim 7, wherein the communication-related configuration comprises at least one of:
a bearer configuration, a zero power terminal identity, a security configuration, or a service identity.

9. The system of any one of claims 1 to 8, wherein the service control node is configured to perform at least one of:
configuring a service-related configuration of the zero power terminal;
managing a zero power terminal identity of the zero power terminal; or
managing services of the zero power terminal.

10. The system of claim 9, wherein the managing the services of the zero power terminal comprises at least one of:
enabling at least one of the services of the zero power terminal; or
disabling at least one of the services of the zero power terminal.

11. The system of any one of claims 1 to 10, wherein the zero power terminal has a zero power terminal identity that comprises at least one of a zero power service identity, a terminal group identity, or a terminal identity.

12. The system of any one of claim 11, wherein
the zero power terminal identity comprises the zero power service identity and the terminal identity; or
the zero power terminal identity comprises the zero power service identity, the terminal group identity and the terminal identity.

13. The system of claim 11 or 12, wherein the zero power service identity comprises at least one of:
a country code, a district code, a service category, a service group identity or a service identity.

14. The system of claim 13, wherein
the service identity comprises the country code, the district code, the service category and the service identity; or
the service identity comprises the country code, the district code, the service category, the service group identity and the service identity.

15. The system of claim 13 or 14, wherein
a group identity of a service of the zero power terminal comprises the country code, the district code, the service category and the service group identity; or
a group identity of a service of the zero power terminal is identified by a numerical value.

16. The system of any one of claims 11 to 15, wherein
a group identity of the zero power terminal comprises the zero power service identity and the terminal group identity; or
a group identity of the zero power terminal is identified by a numerical value.

17. The system of any one of claims 1 to 16, wherein the zero power terminal comprises at least one of:
a first state corresponding to a normal state of the zero power terminal; or
a second state corresponding to a killed state of the zero power terminal.

18. The system of claim 17, wherein in response to the zero power terminal being in the first state, the zero power terminal has at least one of the following characteristics:
configuration information of the zero power terminal being stored in the zero power terminal and the data center node; or
at least one of a power harvesting module or a communication module of the zero power terminal starting to work.

19. The system of claim 17, wherein in response to the zero power terminal being in the second state, the zero power terminal has at least one of the following characteristics:
configuration information of the zero power terminal being deleted from the data center node;
a power harvesting module and a communication module of the zero power terminal stopping working; or
a zero power terminal identity of the zero power terminal being reclaimed.

20. The system of any one of claims 17 to 19, wherein the first state comprises at least one of:
a dormant state, a charge state, or a working state.

21. The system of claim 20, wherein in response to the zero power terminal being in the dormant state, the zero power terminal has a characteristic comprising:
a power harvesting module of the zero power terminal being ready to be enabled to harvest power from radio waves.

22. The system of claim 20, wherein in response to the zero power terminal being in the charge state, the zero power terminal has a characteristic comprising:
a power harvesting module of the zero power terminal being enabled to harvest power from radio waves.

23. The system of claim 20, wherein in response to the zero power terminal being in the working state, the zero power terminal has a characteristic comprising:
a communication module of the zero power terminal being enabled to perform signal transmission between the zero power terminal and the access network node.

24. The system of any one of claims 20 to 23, wherein the zero power terminal is capable of transitioning between any two of the dormant state, the charge state and the working state.

25. The system of any one of claims 17 to 24, wherein the zero power terminal is capable of transitioning from the first state to the second state.

26. The system of claim 25, wherein the zero power terminal transitions from the first state to the second state based on a command from a network side.

27. The system of claim 26, wherein the command from the network side is a non-access stratum (NAS) signaling or a radio resource control (RRC) signaling.

28. The system of any one of claims 1 to 27, wherein
a control plane protocol stack exists between the zero power terminal and the access network node, and comprises a radio resource control (RRC) layer, a media access control (MAC) layer and a physical (PHY) layer; and
no control plane protocol stack exists between the zero power terminal and the core network node.

29. The system of any one of claims 1 to 27, wherein
a control plane protocol stack exists between the zero power terminal and the access network node, and comprises a radio resource control (RRC) layer, a media access control (MAC) layer and a physical (PHY) layer; and
a control plane protocol stack exists between the zero power terminal and the core network node, and comprises a non-access stratum (NAS) layer.

30. The system of any one of claims 1 to 27, wherein
a control plane protocol stack exists between the zero power terminal and the access network node, and comprises a radio resource control (RRC) layer, a packet data convergence protocol (PDCP) layer, a media access control (MAC) layer and a physical (PHY) layer; and
no control plane protocol stack exists between the zero power terminal and the core network node.

31. The system of any one of claims 1 to 27, wherein
a control plane protocol stack exists between the zero power terminal and the access network node, and comprises a radio resource control (RRC) layer, a packet data convergence protocol (PDCP) layer, a media access control (MAC) layer and a physical (PHY) layer; and
a control plane protocol stack exists between the zero power terminal and the core network node, and comprises a non-access stratum (NAS) layer.

32. The system of any one of claims 1 to 27, wherein
a control plane protocol stack exists between the zero power terminal and the access network node, and comprises a radio resource control (RRC) layer and a physical (PHY) layer; and
no control plane protocol stack exists between the zero power terminal and the core network node.

33. The system of any one of claims 1 to 27, wherein
a control plane protocol stack exists between the zero power terminal and the access network node, and comprises a radio resource control (RRC) layer and a physical (PHY) layer; and
a control plane protocol stack exists between the zero power terminal and the core network node, and comprises a non-access stratum (NAS) layer.

34. The system of any one of claims 1 to 31, wherein a user plane protocol stack exists between the zero power terminal and the access network node, and comprises a media access control (MAC) layer and a physical (PHY) layer.

35. The system of any one of claims 1 to 31, wherein a user plane protocol stack exists between the zero power terminal and the access network node, and comprises a packet data convergence protocol (PDCP) layer, a media access control (MAC) layer and a physical (PHY) layer.

36. The system of claim 29 or 31, wherein the NAS layer is configured to transmit NAS signaling for performing at least one of:
carrying at least one of data or signaling;
information reporting from the zero power terminal to the core network node; or
information transmission from the core network node to the zero power terminal.

37. The system of any one of claims 30, 31 and 35, wherein the PDCP layer comprises at least one of the following functions: security protection, reordering, duplicate detection, or serial number (SN) maintenance.

38. The system of any one of claims 28 to 31, wherein the RRC layer comprises at least one of the following functions:
transmission of RRC signaling for carrying at least one of downlink signaling or uplink signaling; or
segmentation of RRC signaling to be transmitted into segments, each segment corresponding to a respective segment number,
wherein the RRC signaling is associated with a serial number.

39. The system of claim 32 or 33, wherein the RRC layer comprises at least one of the following functions:
transmission of RRC signaling for carrying at least one of downlink signaling or uplink signaling;
segmentation of RRC signaling to be transmitted into segments, each segment corresponding to a respective segmentation number; wherein the RRC signaling is associated with a serial number;
multiplexing of at least one of data or signaling;
demultiplexing of at least one of data or signaling;
submitting of a transport block (TB) to the PHY layer; or
segmentation of a TB.

40. The system of any one of claims 28 to 31, 34 and 35, wherein the MAC layer comprises at least one of the following functions:
multiplexing of at least one of data or signaling;
demultiplexing of at least one of data or signaling;
submitting of a transport block (TB) to the PHY layer; or
segmentation of a TB.

41. The system of any one of claims 28 to 35, wherein the PHY layer comprises at least one of the following functions:
data processing; or
data transmission.

42. The system of any one of claims 1 to 41, wherein the zero power terminal corresponds to a data transmission mode including at least one of a first transmission mode or a second transmission mode.

43. The system of claim 42, wherein the first transmission mode includes:
data transmission between the zero power terminal and the access network node through radio resource control (RRC) signaling; and
data transmission between the access network node and the core network node through next generation application protocol (NGAP) signaling.

44. The system of claim 42, wherein the second transmission mode includes:
data transmission between the zero power terminal and the access network node through a data resource bearer (DRB); and
data transmission between the access network node and the core network node through a general packet radio service tunneling protocol (GTP) tunnel.

45. The system of any one of claims 42 to 44, wherein the core network node is configured to transmit data from the zero power terminal to the service control node or transmit data from at least one zero power terminal comprising the zero power terminal to the service control node, based on an address of the service control node.

46. A communication method, performed by the zero power communication system according to any one of claims 1 to 45, the method comprising:
communicating, by the zero power terminal, with at least one of the core network node, the data center node or the service control node through the access network node.

47. A terminal device, comprising a processor and a memory for storing a computer program, the processor calls and runs the computer program stored in the memory to perform the method of claim 46.

48. A chip, comprising a processor which calls and runs a computer program from a memory, to cause a device on which the chip is installed to perform the method of claim 46.

49. A computer-readable storage medium for storing a computer program, wherein the computer program causes a computer to perform the method of claim 46.

50. A computer program product comprising computer program instructions, wherein the computer program instructions cause a computer to perform the method of claim 46.

51. A computer program for causing a computer to perform the method of claim 46.
